# EUROPEAN PATENT SPECIFICATION

(11) **EP 0 326 380 B1**
(45) Date of publication and mention of the grant of the patent: **21.07.1993**
(21) Application number: 89300749.2
(22) Date of filing: 26.01.1989
(51) Int. Cl.: G01F 15/00, G01F 3/10

(54) **Compensating method and device for instrumental error in rotary displacement flowmeter**
Verfahren und Vorrichtung zum Kompensieren des Messgerätefehlers bei einem rotierenden Verdrängungszähler
Procédé et dispositif compensateur pour l'erreur d'instrument des débitmètres volumétriques de rotation

(30) Priority: 26.01.1988 JP 15157/88
(43) Date of publication of application: 02.08.1989
(73) Proprietor: Kitano, Akitoshi, Aichi-gun Aichi-ken (JP)
(72) Inventor: Kitano, Akitoshi, Aichi-gun Aichi-ken (JP)
(74) Representative: Knowles, Audrey Elizabeth

(56) References cited:
- EP-A- 0 100 844
- DE-A- 2 420 896
- US-A- 3 965 341
- US-A- 4 120 032
- US-A- 4 720 800

## Description

The present invention relates to an instrumental compensation apparatus for rotary displacement flowmeters or the like.

Elliptical gear flowmeters are outstandingly superior in measurement functions to other conventional flowmeters, and therefore most suitable for further enhancing the measurment functions by means of the present invention.

Because of mechanical structures in rotary displacement flowmeters, leakage of fluids due to pressure differences cannot be perfectly prevented due to small clearances between rotors or the inside wall and rotors. This leakage rate varies with viscosity changes caused by temperature changes in subject fluids and apparatus error will increase or decrease throughout the flow-rate range.

The action of temperature compensation mechanisms for conventional displacement flowmeters is to make a real time determination of the fluid expansion and shrinkage due to temperature rise and fall during the measurement for continuous conversion to volumes at certain conditions. However, the flowmeters do not indicate real correct flows because the fluid viscosity varies with the change in the fluid temperature.

US-A-3965341 describes a method of correcting a flowmeter in which a flow-rate signal is obtained on the basis of the period of the signal from the rotation sensor and in which the temperature of the fluid is measured and corrections of the flow-rate signal in dependence on viscosity and subsequently specific gravity are performed under control of the temperature measurement.

DE-A-2420896 describes a method of correcting a flow-rate signal for viscosity variations with temperature.

The object of the present invention is to exclude errors arising from viscosity changes accompanied by temperature changes in the subject fluid between flow-rates indicated from rotational motion of measurement elements in a flowmeter rotor and the real correct values observed in order to indicate the real correct flow-rate.

According to the present invention I provide a method of improving the accuracy of a flowmeter having a casing defining a measurement chamber with an inlet and outlet means and rotor means within the casing responsive to the flow-rate of fluid flowing therethrough, the method comprising the steps of:-
monitoring the temperature of the fluid in the measurement chamber or a pipe connected thereto,
monitoring the rotation of the rotor means with a rotation sensor, and
inputting signals representative of these quantities to an electronic arithmetic and control unit,
operating said control unit to calculate the flow-rate on the basis of the rotational speed of the rotor means, and to compensate said calculated flow-rate for specific gravity variation using first data relating specific gravity of said fluid with associated instrument errors as a function of temperature of the fluid, said first data being stored in a memory in the control unit,
using the monitored temperature to generate a correction value from second data stored in a memory of the control unit relating viscosity of said fluid with internal leakage as a function of temperature, and from the period of pulses from the rotation sensor, said correction value being arranged to compensate for internal leakage between the casing walls and the rotor means and/or between the rotor means, which leakage varies in dependence on viscosity, and
adding said correction value to the flow-rate compensated using said first data for outputting and indicating a corrected flow-rate.

By this invention, measurement accuracies can be enhanced and more advanced process controls can be realised by making real time compensation of instrumental errors due to viscosity changes from varying temperatures by the use of temperature sensors installed within the instrument or at locations adjacent to the fluid path.

Between the instrumental error/flow-rate curve assumed for ideal values, the rotor rotational speed/instrumental error curve, and the temperature change/instrumental error curve, there exist certain respective relations, and indication of more correct measurement values are made possible by making compensations with respective certain ratios. These correct indications can be utilised for super precision measurement and process control, especially in fine chemical fields.

Apparatus for carrying out the above method is defined in Claim 2.

Especially, apparatus for carrying out the invented method compensates error values arising from theoretical instrumental error/flow-rate curves due to micro-temperature changes in the course of a process.

Depending upon the dimension of non-circular gear flowmeter rotors and designs of the bodies for performing measurement functions, there exist certain relations between the rotational speed of the rotors and instrumental errors thereto.

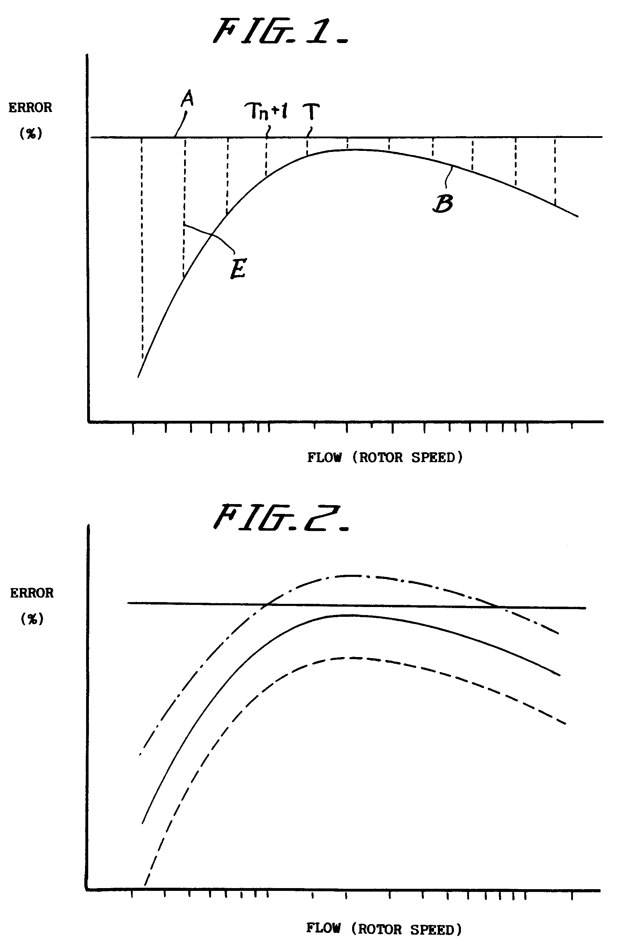

As shown in Fig.1, certain relations are represented between the theoretical curve (A) and observed curve (B) for instrumental error Vs. rotor rotational speed. That is, by adding instrumental error values (E), increasing at high and low rotational speeds of the rotor, to the converted flow-rate calculated from the rotor rotation, compensating instrumental error specific to instruments, and making additions with an arithmetic unit, a real correct flow-rate is indicated.

Moreover, because the specific gravity and viscosity of the subject fluid can be varied by a small temperature change, the flow-rate calculated for indication by the rotor rotational speed should be added with other corresponding compensation values.

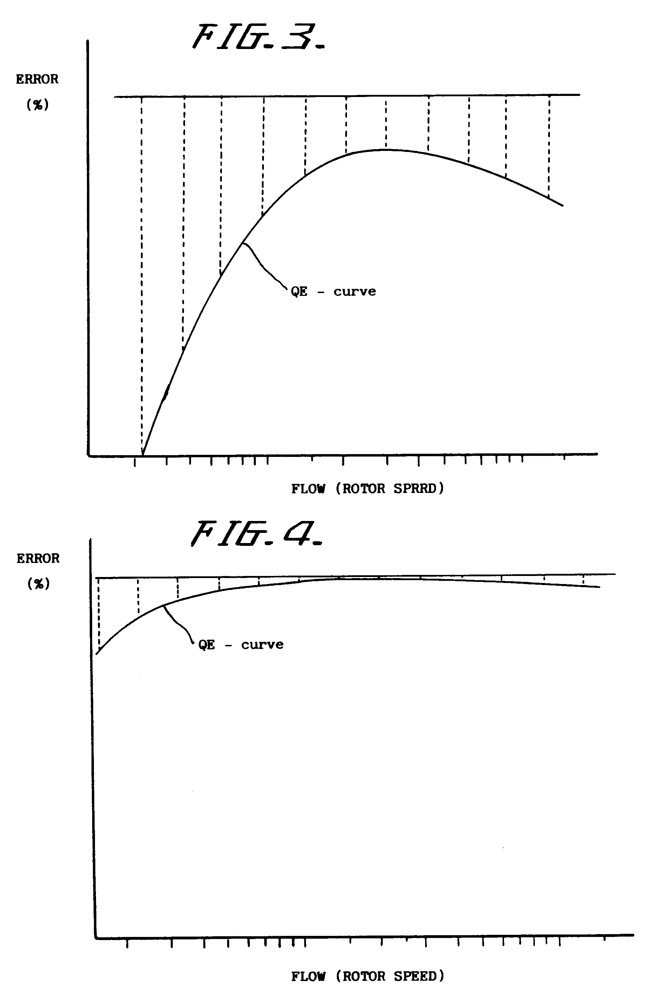

The line (A) in Fig.2 shows the theoretical curve for instrumental error Vs. flow, and the lines (C) and (D) show instrumental error Vs. flow curves for illustrating observed values where the line (D) represents a higher temperature than the line (C).

The experimental result reveals that the discrepancy at the peak X₁ and X₂, low rotational speed range Y₁ and Y₂, and high rotation speed range Z₁ and Z₂ are not proportional to temperature changes, and show specification changes respectively.

Instrumental error Vs. flow-rate curves represent also specific shapes depending upon the viscosities of subject fluids of different kinds, and the values of the curve also increase for low viscosity fluids.

For the case here, the reference temperature has been established at 20^{o}C, the instrumental error Vs. flow-rate curve (B) is drawn modifying the curve (C) or (D) or making condition compensation with the condition compensation values for excluding the influences of viscosities.

By this procedure the error (E) in Fig.1 is excluded by the compensation system in Fig.2, and the ideal curve (A) is obtained, and real correct values are calculated. Real correct values are, therefore, obtained by compensating the flow-rate with the instrumental error corresponding to the rotor rotational speed or in accordance with the instrumental characteristic curve determined by the specification of the instrument proper.

Fig.3 shows a curve for a liquid of low viscosity and, similar curves may be shown for an instrument with larger clearance between rotors where much internal leakage exists.

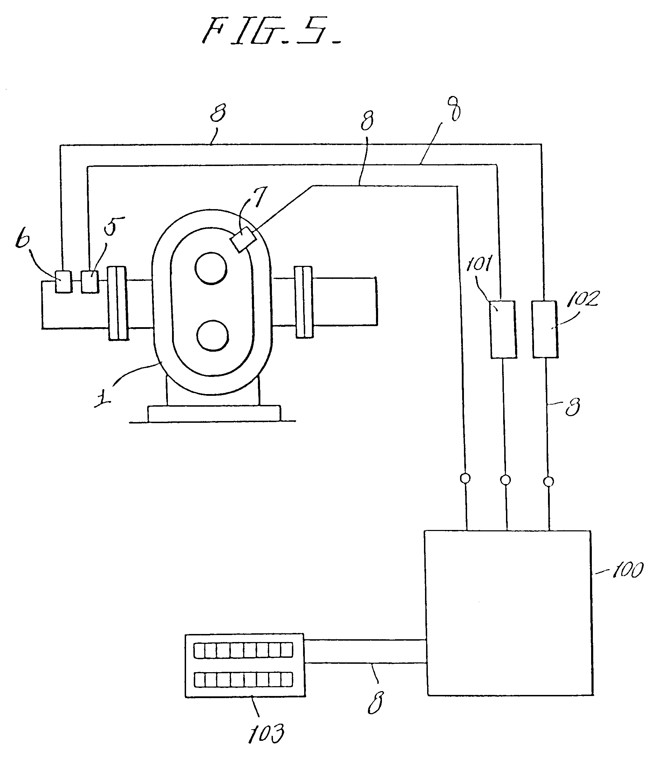

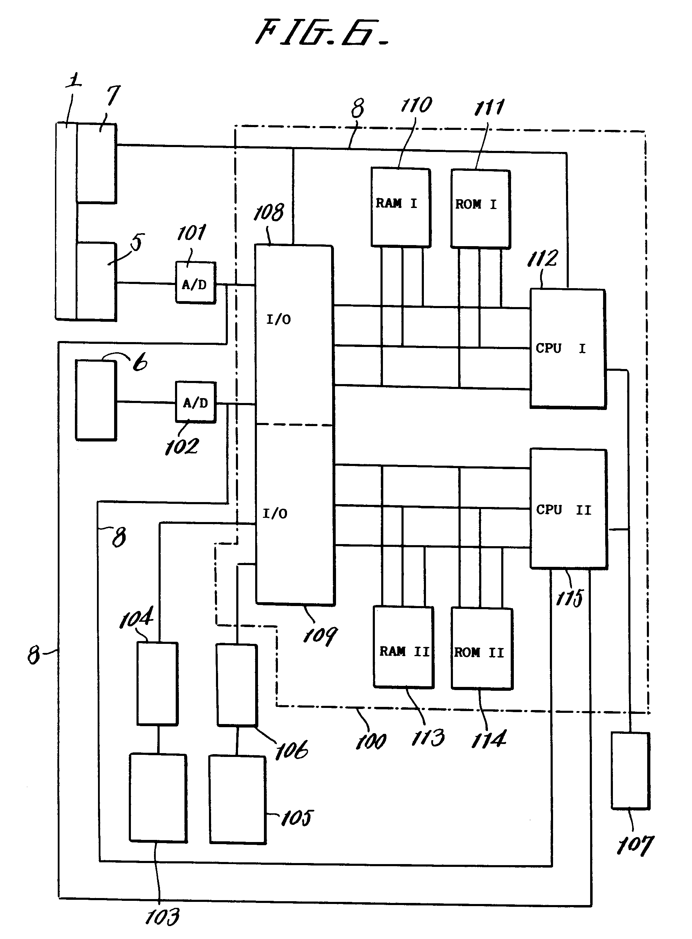

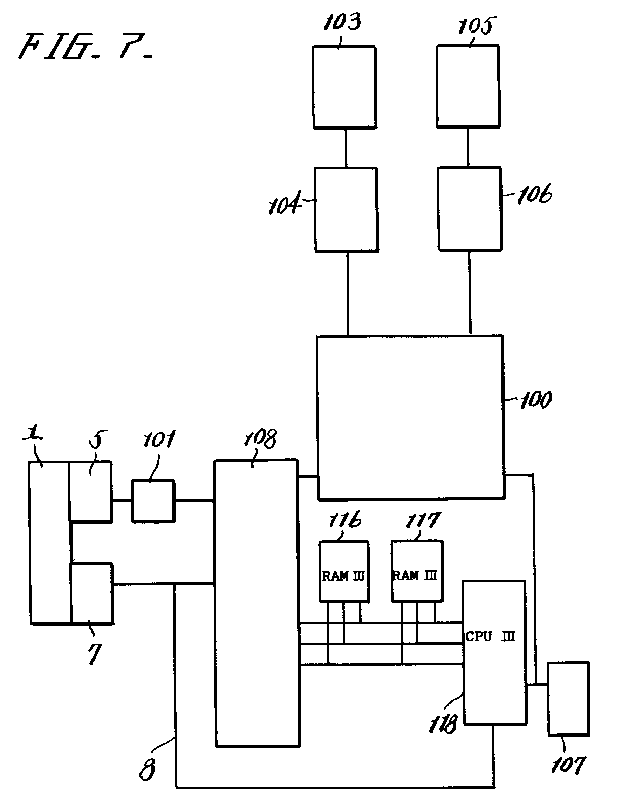

A fluid of high viscosity or flowmeter with smaller clearance values in the body thereof and consequential smaller internal leakage is represented as QE curve in Fig.4.

Exemplary embodiments of the invention will now be described with reference to the accompanying drawings wherein:-
Fig.1 shows a curve (QE curve) for illustrating the correlation between instrumental errors and rotor rotational speed;
Fig.2 shows another QE curve of a subject fluid compensated for viscosity index and volumetric expansion coefficient at a high temperature for comparison to the curve at a reference temperature;
Fig.3 shows another QE curve for an instrument with large clearances;
Fig.4 shows another QE curve for an instrument with smaller clearances;
Fig.5 shows an instrument having a built-in temperature sensor and illustrating diagrammatically a computer equipped with ROM for instrumental error compensation;
Fig.6 shows an instrumental error compensation system including CPU, I/O converter, ROM, RAM and others;
Fig.7 shows a circuit diagram including a control unit for input of magnetic sensor interruption and clock signal interruption for compensation characteristic curve errors to the ideal QE curve between a flowmeter with a built-in rotation magnetic sensor and control unit;
Fig.8 shows a circuit diagram for a compensation unit including circuits to compensate instrumental errors due to viscosity and specific gravity changes from the temperature changes of an instrument with built-in rotation magnetic sensors and temperature sensors;
Fig.9-a is a side view of an instrument incorporated with temperature sensors and rotation magnetic sensors;

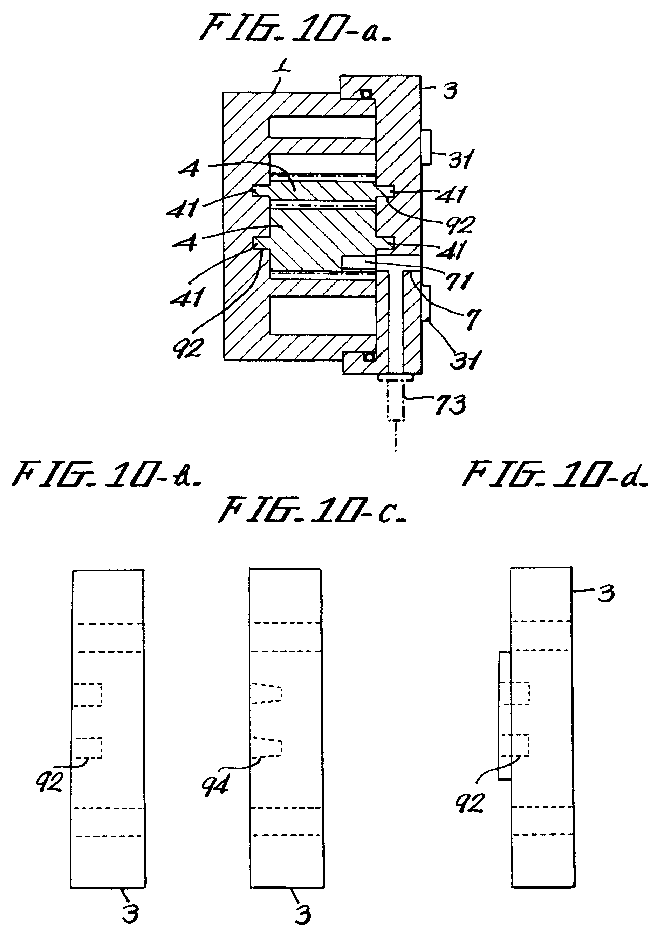

Fig.9-b is an end view of the instrument shown in Fig.9-a;
Fig.9-c is a section on the line A-A of Fig.9-a;
Fig.9-d is a section on the line B-B of Fig.9-b;
Fig.9-e is a perspective view of the flowmeter body shown in Figs.9-a to 9-d with the side cover removed;
Fig.9-f is a perspective view of the rear face of the side cover shown in Figs.9-a to 9-c;
Figs.9-g,h,l are views illustrating the side and inside of other side covers;
Figs.9-j,k,l are views of the side, front and rear faces of a further side cover;
Fig.10-a is a sectional view of another embodiment of a flowmeter;
Figs.10-b,c,d are side views of three side covers;
Figs.10-e,f are perspective views of the inside of the covers shown in Figs.10-b,d respectively.

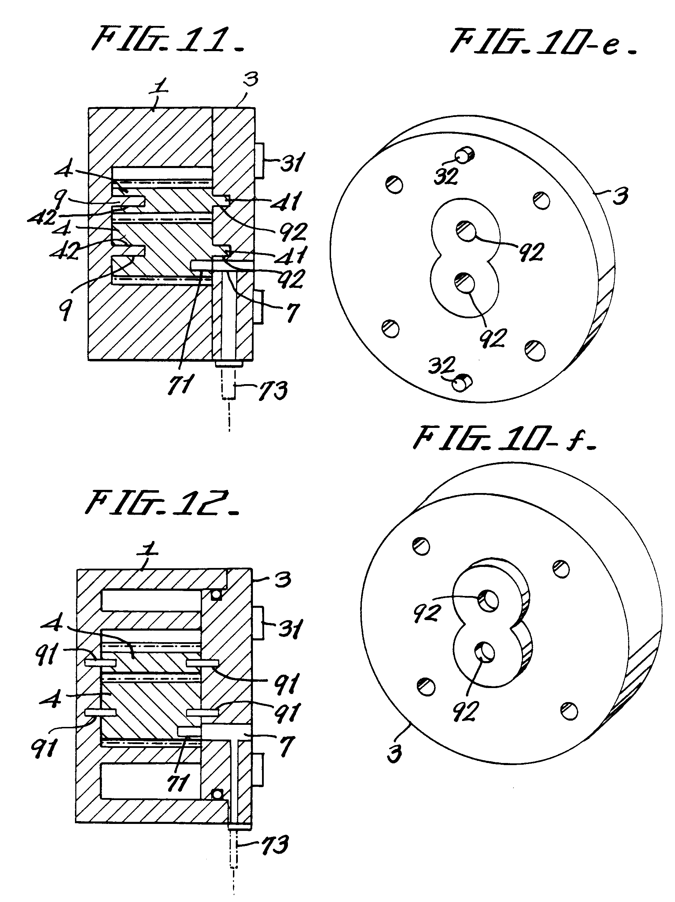

Fig. 11 is a sectional view of another embodiment of a flowmeter similar to the one shown in Figs.9-a,b;
Fig. 12 is a sectional view of a further embodiment of flowmeter similar to the one shown in Figs.9-a,b;

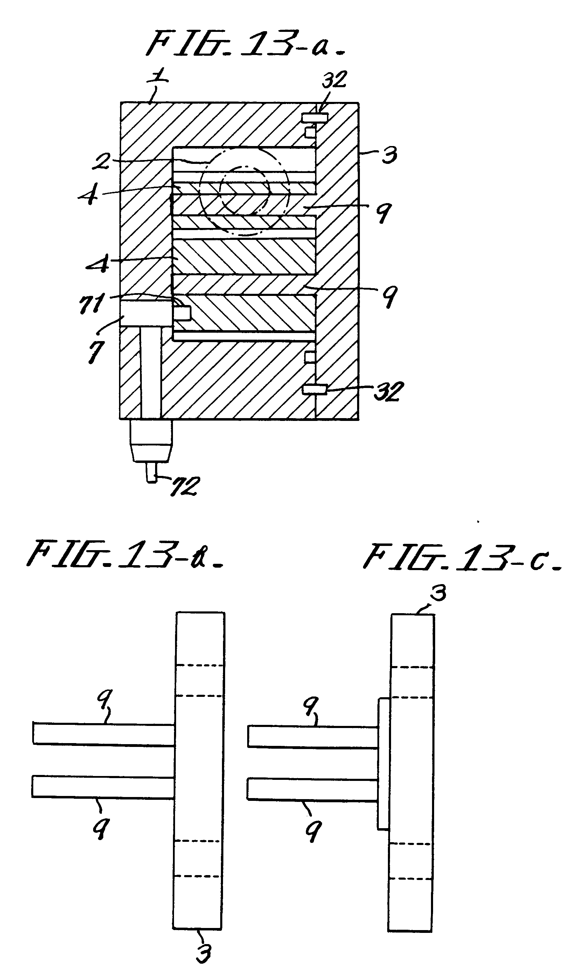

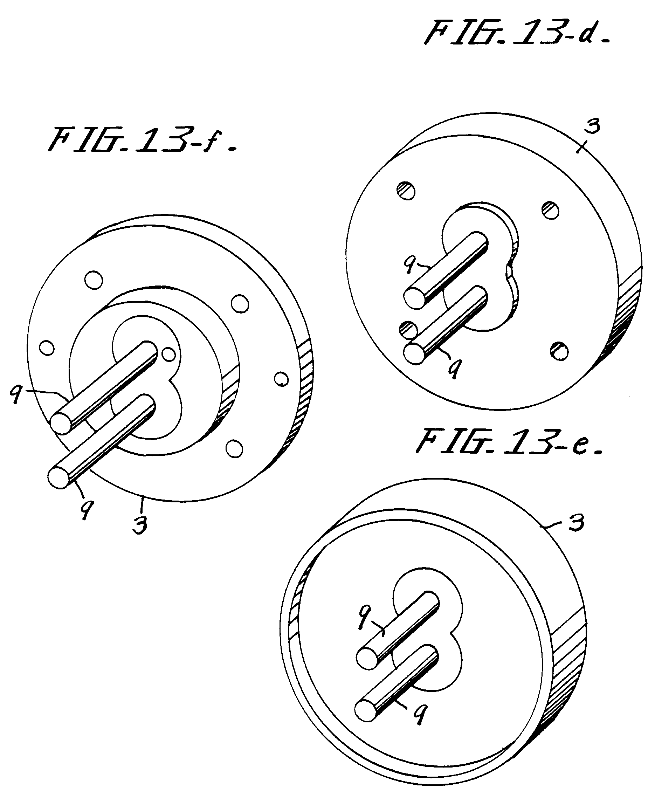

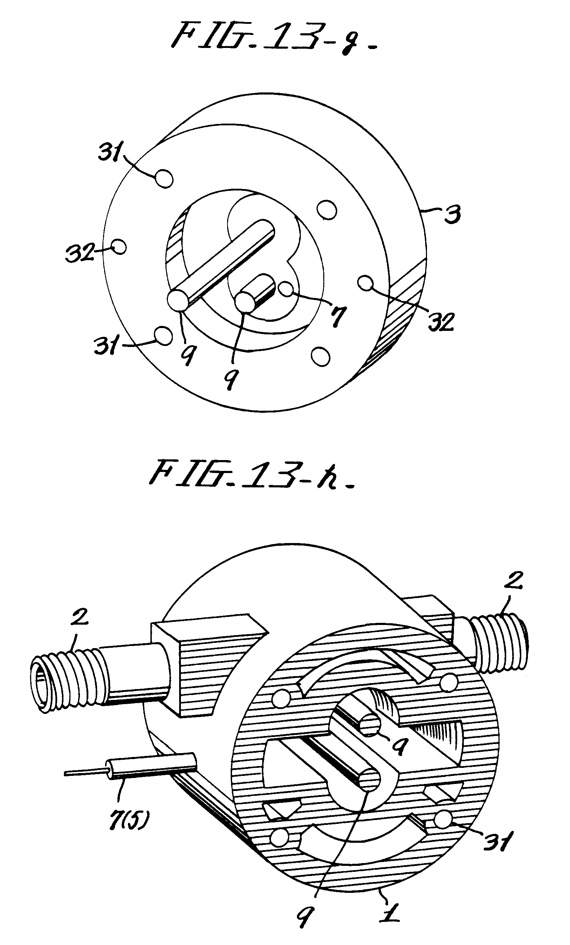

Fig.13-a is a sectional view of another embodiment where the side cover is formed integral with long shafts;
Figs.13-b,c are side views of synthetic resin side covers formed integral with long shafts;
Figs.13-d,e,f,g are perspective views showing the rear face of side covers with integrally formed shafts;
Fig.13-h is a perspective view of a synthetic resin casing body with integrally formed long shafts;

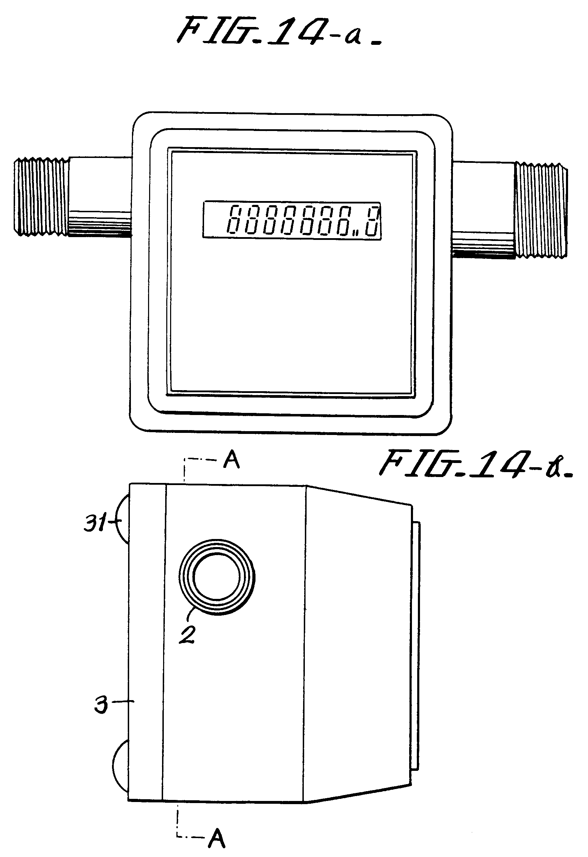

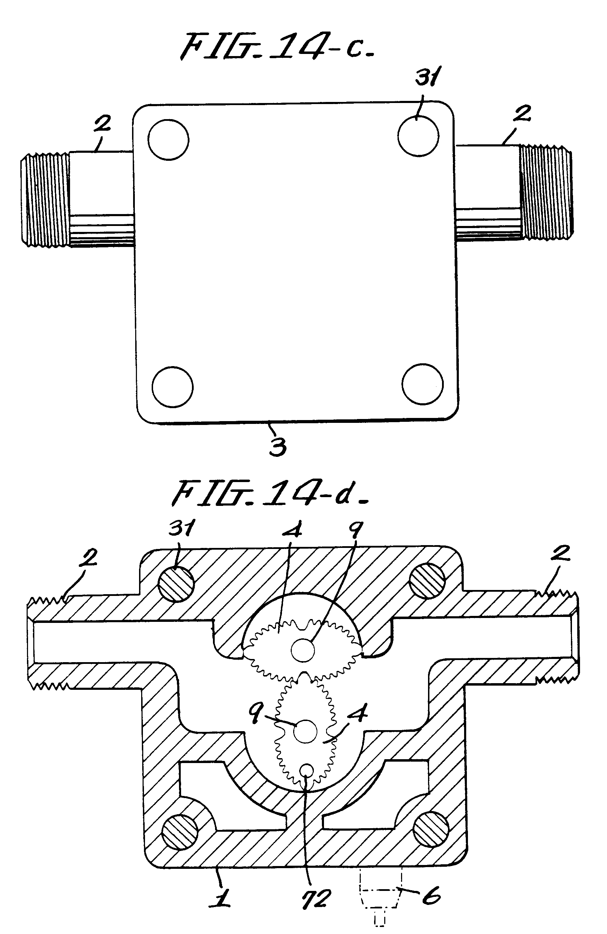

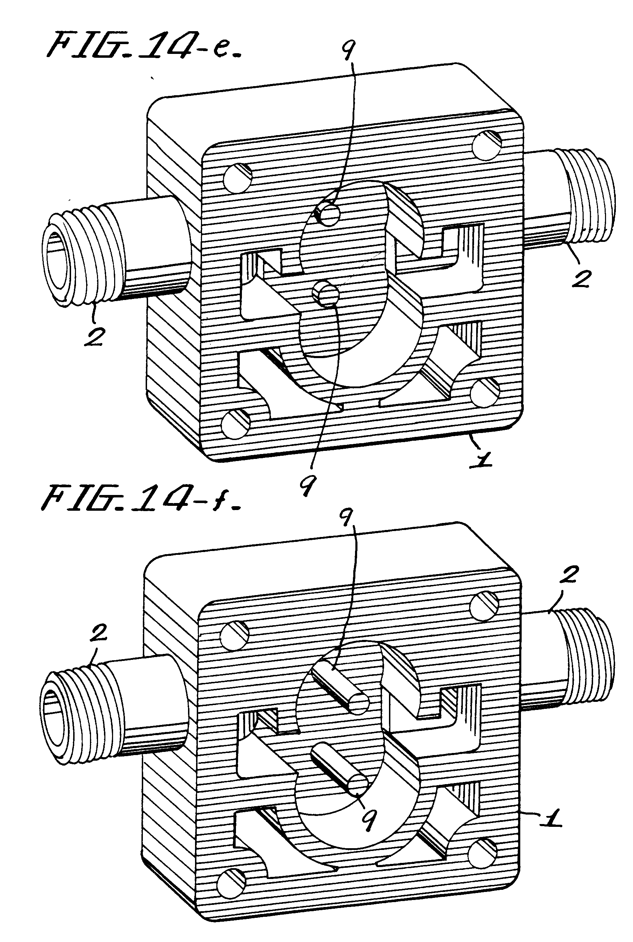

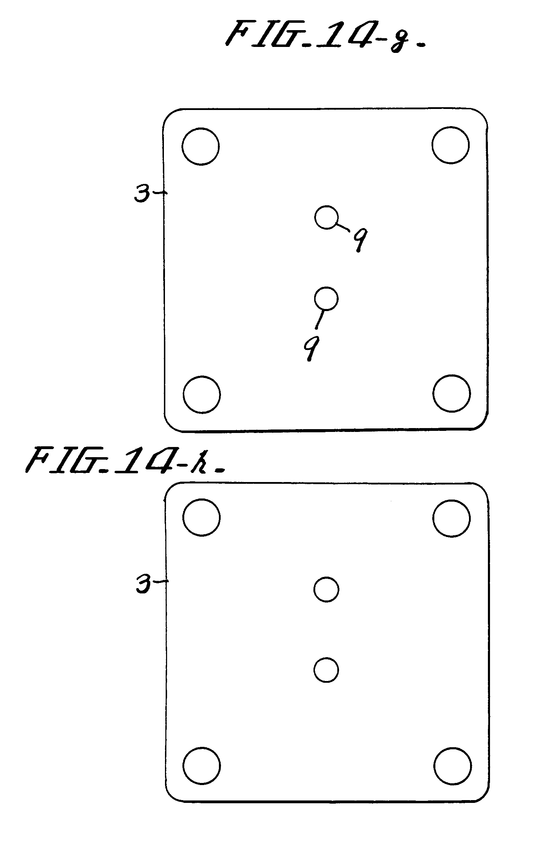

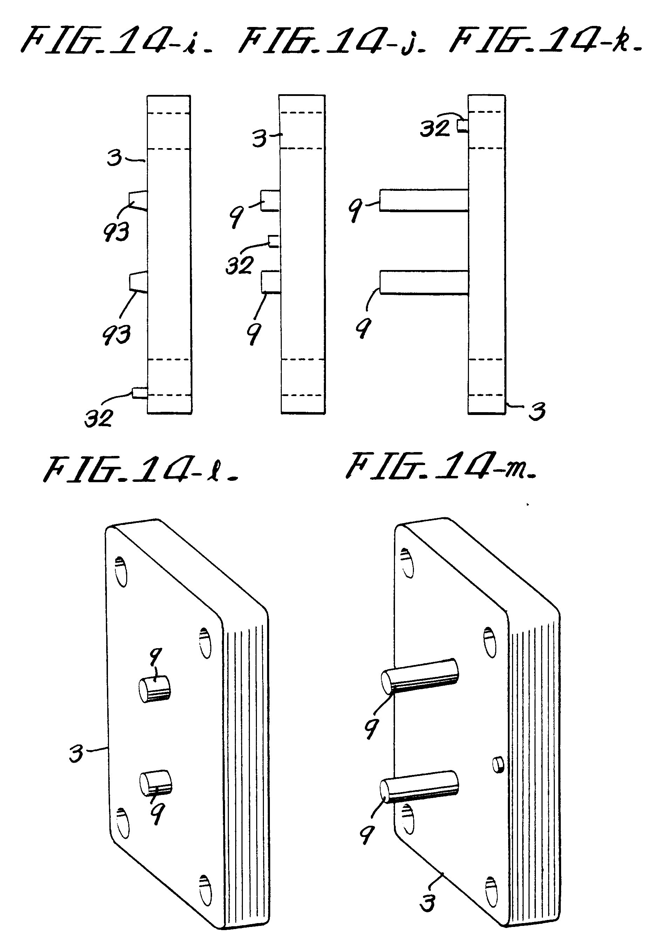

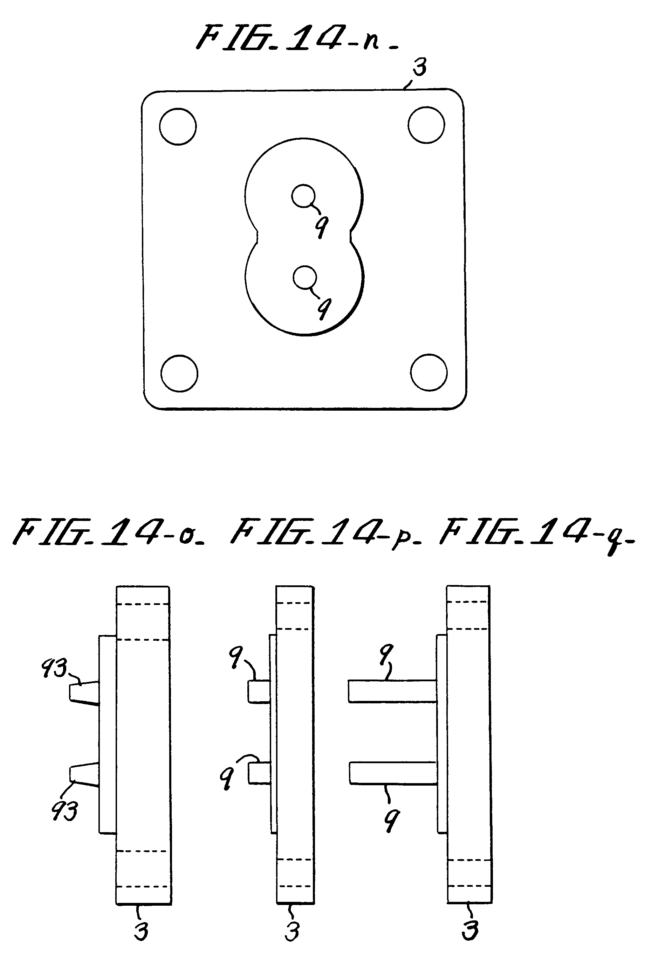

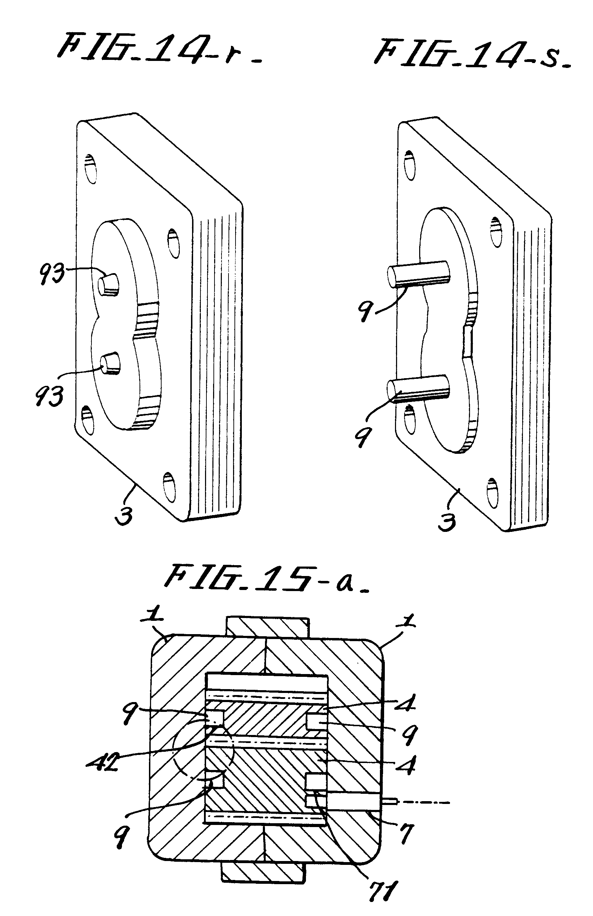

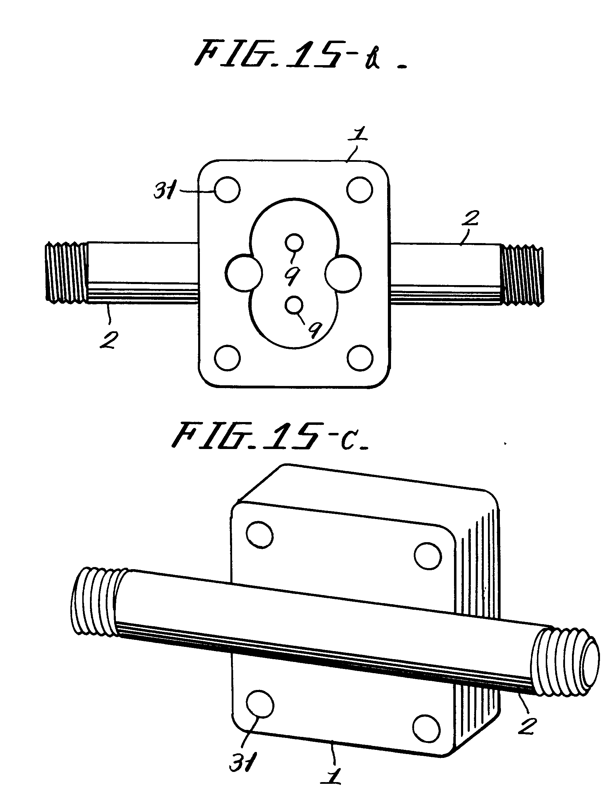

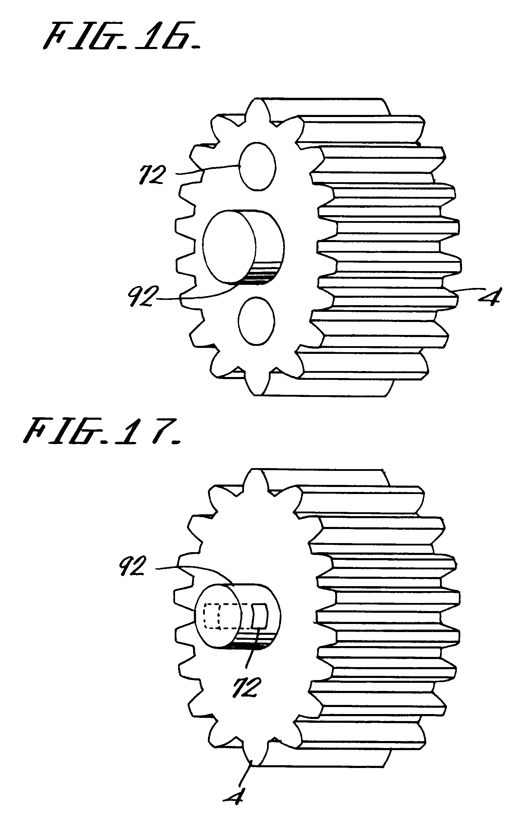

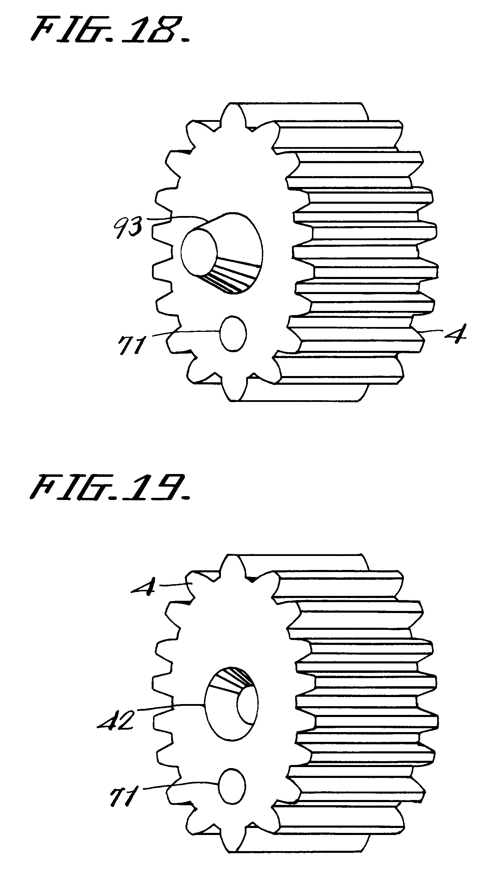

Fig.14-a is a front view of a flowmeter structure integral with an indicator section;
Fig.14-b is an end view of the flowmeter shown in Fig.14-a;
Fig.14-c is a rear view of the flowmeter shown in Fig.14-a;
Fig.14-d is a section on the line A-A of Fig.14-b;
Fig.14-e is a perspective view showing the inside of a synthetic resin casing body formed integral with short shafts;
Fig.14-f is a perspective view showing the inside of a synthetic resin casing body formed integral with long shafts;
Figs.14-g,h are inside views of the side cover;
Figs.14-i,j,k are side views of side covers formed integral with long or short shafts;
Figs.14-l,m are inside views of the side covers shown in Figs.14-j,k;
Fig.14-n is an inside view of a synthetic resin cover where the shaft is formed integral with the side cover and a packing part;
Figs.14-o,p,q,r,s are views of side covers similar to Figs.14-i,j,k,l,m with packing pieces;
Fig.15-a is a sectional view of an embodiment having a divided casing and short shafts formed integral with the inside of each casing half;
Figs.15-b,c are inside and rear views of the casing of Fig.15-a;
Fig.16 is a perspective view of a non-circular synthetic resin gear rotor formed integral with a cylindrical shaft;
Fig.17 is a perspective view of a gear rotor in whose shaft a rotation detector member is provided;
Fig.18 is a perspective view of a non-circular gear rotor formed integral with a cone shape shaft;

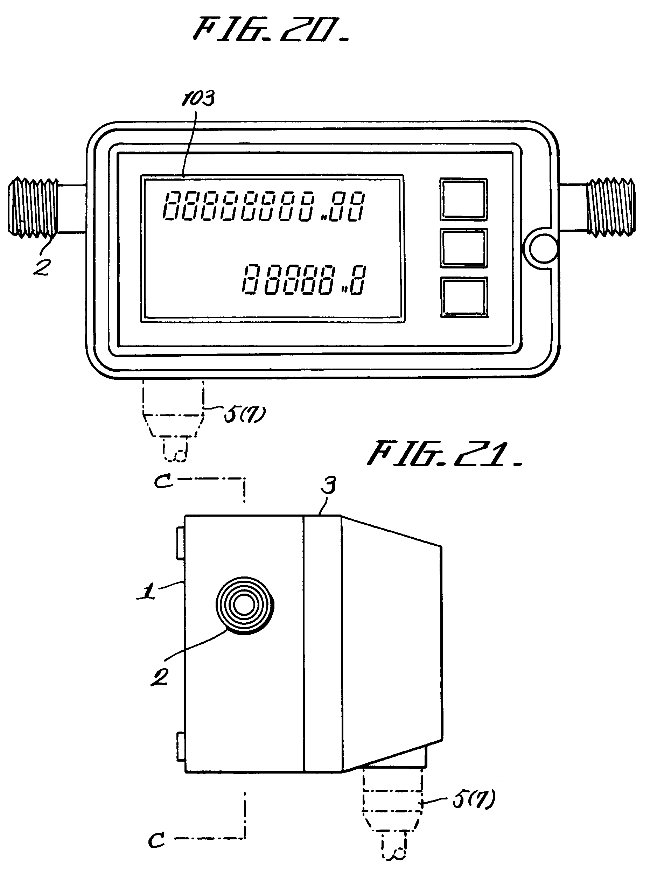

Fig.19 is a perspective view of a non-circular gear rotor formed integral with a cone shape bearing;
Fig.20 is a front elevation of an embodiment whose indicator section has a built-in strainer;
Fig.21 is an end view of Fig.20;

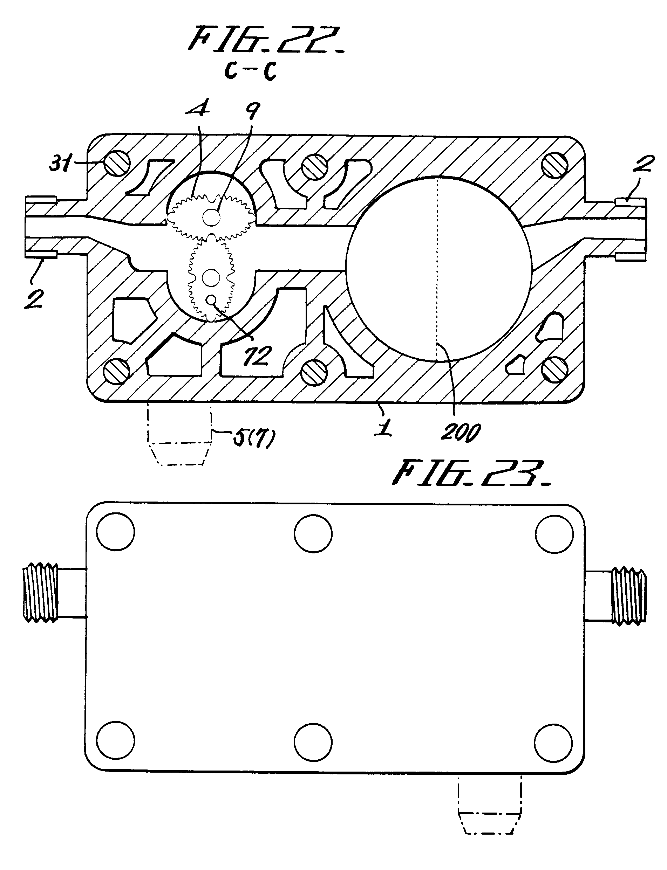

Fig.22 is a section on the line C-C in Fig.21; and
Fig.23 is a rear view of Fig.20.

In the error compensation apparatus of the invention, a rotation detector sensor for input of pulse signal to indicate a measurement per revolution of the rotor of a rotary displacement flowmeter, a temperature sensor to detect the fluid temperature, and a micro-computer are provided. The period of the flow-rate pulse signal is measured, a flow-rate per one rotation pulse is read out from data of the period previously stored in ROM and compensated flow-rate. A real time temperature compensation coefficient is read out from the specific gravities for each temperature stored in ROM and temperature compensation data indicated. Then the above-mentioned flow-rate for each of the above-mentioned pulses is modified. This modified flow-rate is further compensated by the following method. A modification value is determined by the compensation coefficient obtained by the viscosity-instrumental error correlation to temperatures from the compensation coefficient data stored in ROM for indicating viscosities previously for each temperature, and the above-mentioned modified flow-rate is added with said modification value on real time for modification.

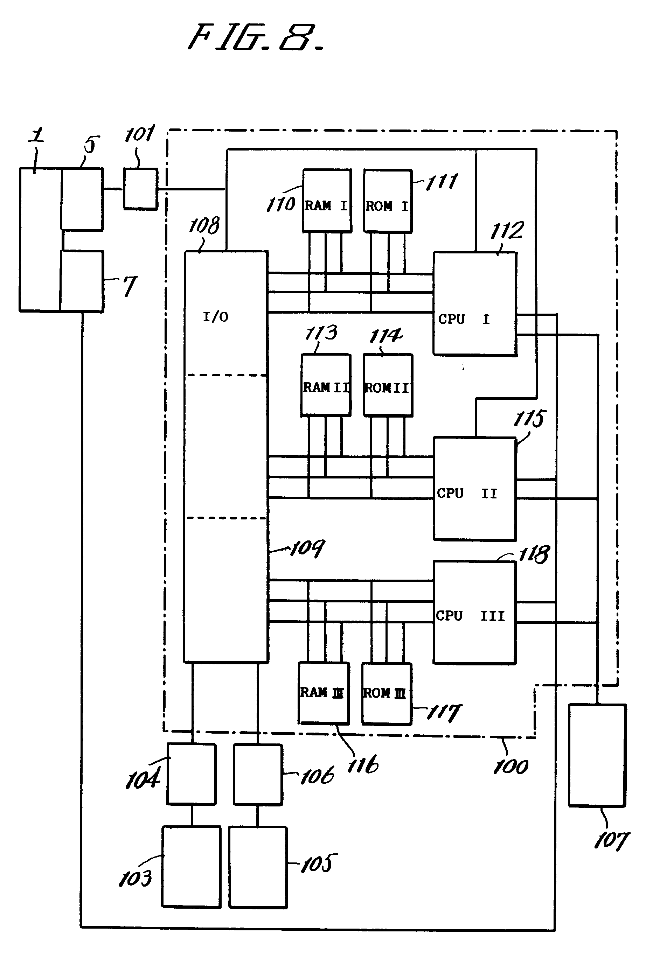

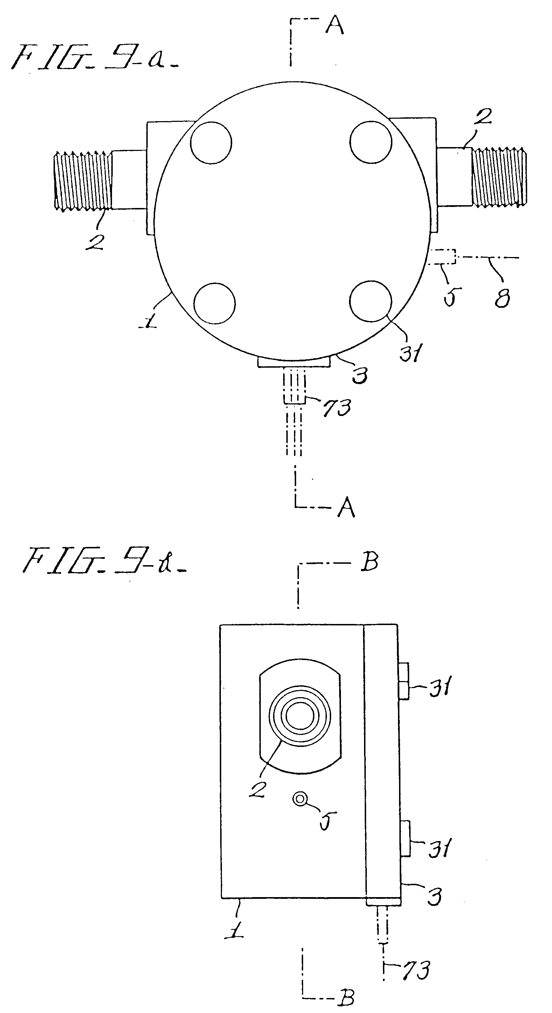

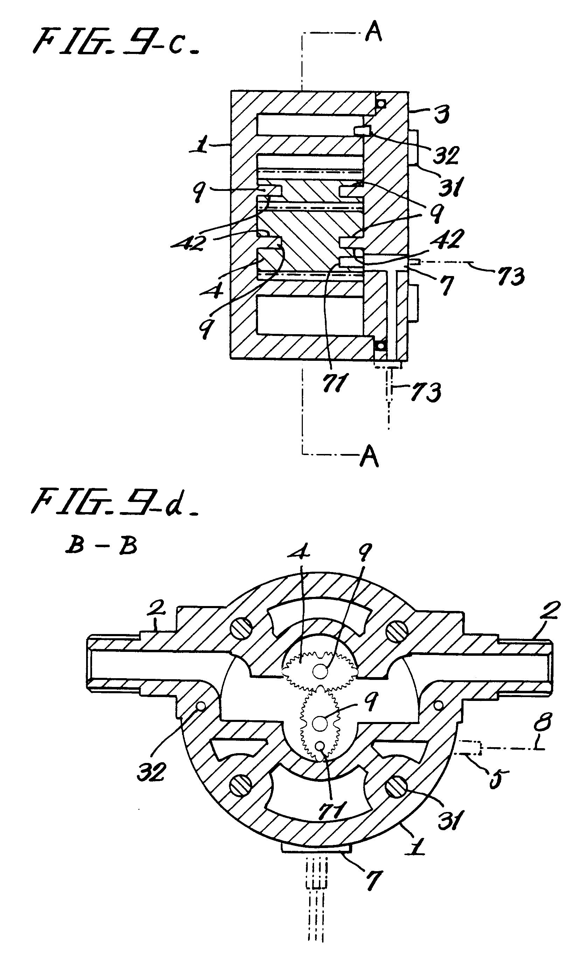

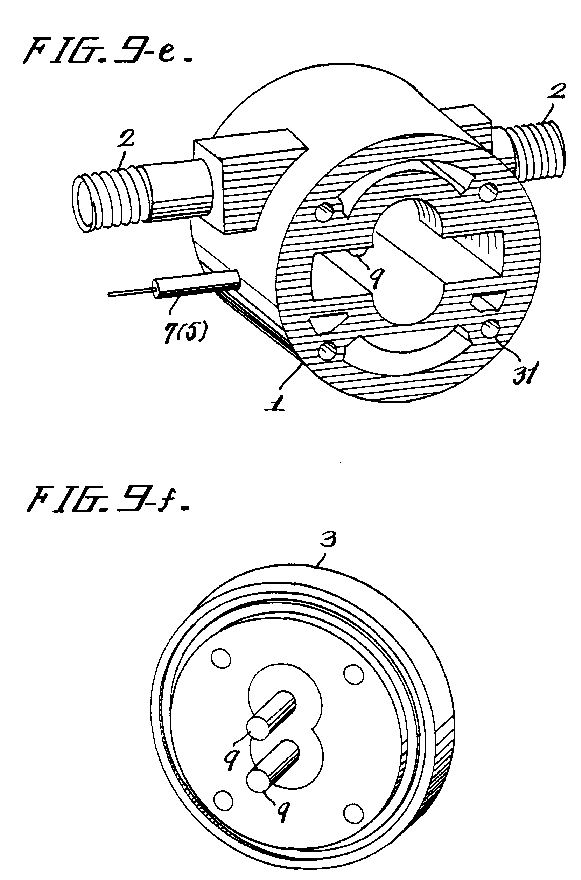

With reference to the embodiment shown in Figures 5 and 6, the numeral 1 denotes a displacement flowmeter. The numeral 5 denotes a temperature sensor installed in the instrument chamber or in the piping directly connected thereto. Signals of the temperature sensor 5 are transferred to the control unit 100 with wiring via A/D converter 101. The numeral 6 denotes the case of a viscosity sensor. The signals transmitted from an arithmetic unit in the control unit 100 bring an indicator 103 into action. Figure 6 is an illustration drawing of the internal circuitry of the control unit 100, and equipment connected thereto. The pulse signals from the temperature sensor 5 and rotation detector sensor 7 transmitting the rotation of the non-circular gear rotors in the flowmeter is input to the interface 108, and input to the interruption terminal of the central control unit CPU(I) 112.

By this interruption, CPU(I) 112 confirms for calculation, by checking the input of input-output interface 108,109 and then proceeds to calculation, that the pulse input has been made. By the time between this pulse input and its preceding pulse input or the pulse interval, the flow-rate per pulse is read from the compensation data of the instrumental error previously stored in ROM(I) 111, and the temperature is read out that is obtained by converting the specific resistance of the temperature sensor 5 installed in the instrument into digital value by analog-digital converter 101. By the temperature-specific gravity data previously stored in ROM(I) 111, said flow-rate per pulse is converted into the flow-rate at a reference temperature, for example 20^{o}C. This converted flow-rate is further fed back to the input-output interface 108,109. Nextly, the flow-rate per pulse of the the pulse from the rotation sensor 7 is read out from the instrumental error compensation data stored in ROM(II) 114, and the compensation value is obtained from the temperature-viscosity data given by converting the signal of temperature sensor 5 installed in the flowmeter with the converter 101, and then the above-mentioned flow rate is converted into the flow rate at the reference temperature. Then an accumulated flow or instantaneous flow-rate is indicated on the indicator 103 via the driver. Alternatively, the counter 105 is brought into action. The numeral 6 denotes a continuous viscosity measurement sensor and can be used in response to a wide variety of liquid being installed individually or along with a temperature sensor.

A guaranteed accuracy of 0.05% means errors within half of thousandth of the indicated flow-rate, and therefore it is essential that the rotors, bearings, thrust bearings and other rotating parts for performing measurement functions of a displacement flowmeter of a mechanical construction is of a structure free from wears and deformations. For example, if the tooth profiles of a rotor for a non-circular gear flowmeter is made to be of a shape excluding liquid confinement phenomena and deformations on the meshing teeth surface, a precise flow-rate compensation effect can be exercised by the micro-computer equipped. Because of a mechanical construction, it is preferred that service conditions are not severe, and it is further important that the instrument used has a low rotational speed of the rotors within the flow-rate range for smallest flow-rate. A lightweight rotor of a low discharge rate (ratio of discharge flow per one rotation to the diaplacement of rotation) can satisfy this requisite.

In the next, the conversion into a correct flow-rate is made by using the above-mentioned electronic compensation mechanism and the instrumental errors are compensated for indication. It is, however, essential that deformations by mechanical wear in the rotors and bearings performing the measurement function of the instrument proper are not produced. As deformations of these rotating parts vary the clearances of the flowmeter proper, instrumental error curves accordingly vary, and conversion values for instrumental error compensation must be modified.

For this reason, a tooth profile such as cycloidal tooth form which excludes liquid confinement should preferably be used. Such gears are superior in durability because no scoring phenomena is produced thereon. They are further smaller in rotational resistance and also superior in measurement functions.

A non-circular gear flowmeter has a high measurement accuracy because of its high volumetric efficiency. The larger flatness rotors may have, the larger its discharge rate becomes, the smaller the instrument proper becomes as well as the instrumental error characteristics are improved, which may be counted as advantages of the instrument. However, a pair of meshing gear rotors revolve with repeated accelerations and decelerations, and therefore vibrations and noises increase with higher rotational speeds, and internal leakages are caused because braking forces increase with higher rotational speeds, and consequently higher instrumental errors will result.

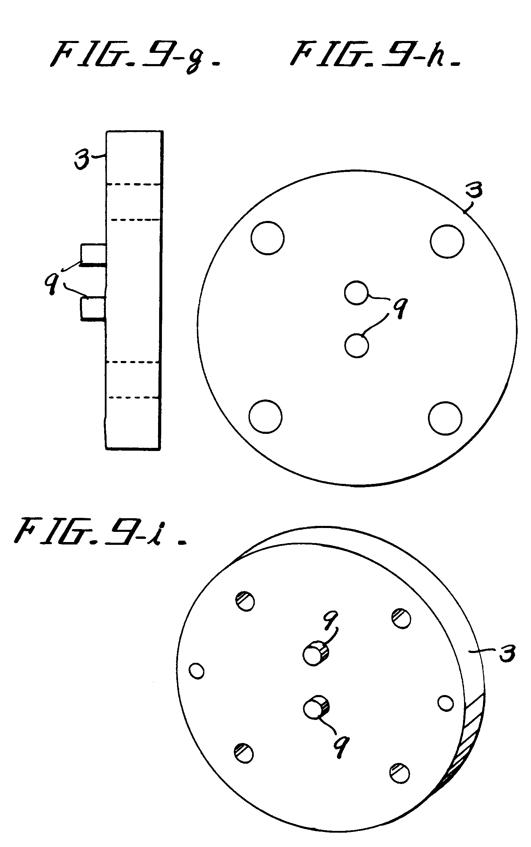

Fig.7 shows a circuit diagram of an embodiment provided, between a control unit and flowmeter, with another control unit for input of interruption of magnetic sensor to compensate for errors of characteristic curve to ideal QE curve and for interruption of clock signals. Fig.7 is an electrical circuit diagram to read out for compensation of the data to compensate errors of instrument-specific characteristics to the ideal QE curve stored In ROM(III) 117 as well as to make instrumental error compensations based on the fluid volumetric changes and correlations of temperature-viscosity with the control unit illustrated in the above-cited Fig.6. The pulse signals from the rotation detection sensor 7 for transferring the rotation of rotors in the flowmeter and from temperature sensor 5 are input to the input interface 108 and to the interruption terminal of central control unit CPU(III) 118. CPU(III) 118 confirms by this interruption that a pulse input has been made by checking the input of the input-output interface 108; reads out the flow per one pulse using the time between this pulse and the preceding pulse from the compensation data on instrumental errors stored in ROM(III) to make compensations for instrument-specific errors in each of flow ranges; in the next calculates compensation values of instrumental errors due to volume, specific gravity and viscosity changes arising from the fluid temperature changes by using the control unit 100 illustrated in the above-cited Fig.6.

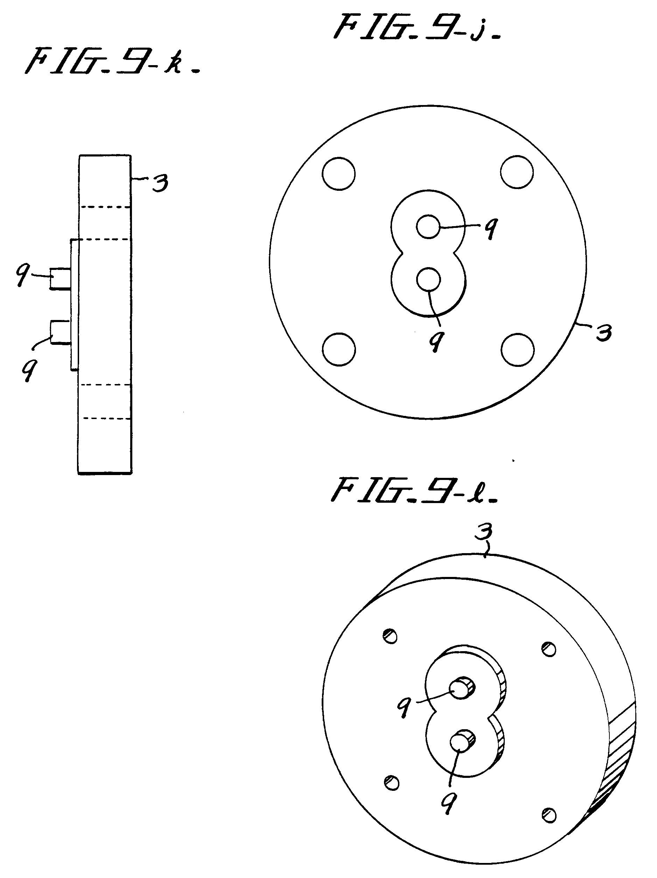

Fig.8 shows a circuit diagram of a control unit combining an electrical circuit diagram incorporated with ROM(I) 111 and ROM(II) 114 for compensating instrumental errors due to volumetric changes and viscosity changes arising from the above-mentioned temperature changes, and an electrical diagram to compensate characteristic errors specific to the flowmeter. The unit has indication and transmission functions for compensation values of instantaneous instrumental errors.

The present invention aims especially at an improvement in accuracies of displacement type flowmeters and, at the same time, at an enhancement in reliability thereof as an industrial instrument. That is, it is essential that the rotor or measurement sensor will not wear and has sufficient durability. Conventional displacement type flowmeters such as elliptic gear flowmeters, Roots type flowmeters and others demand high precision in fabrications, which requires high fabrication costs. Non-circular rotors, when measuring a subject fluid flowing at constant speed in pipings, will rotate with uneven rotational speeds. Accordingly, rotors of light material will have smaller rotation resistances, and will achieve high accuracies. Furthermore, the measurement section comprising a casing, rotors and bearings requires high accuracies for composing members in fabrication and assembly, and also demands special assembly techniques.

Compared to these, an outstanding effect can be obtained in cost-saving because fabrication costs greatly fall if the gear rotors and shafts are made of an integral structure by a forming process of synthetic resins and others, and a casing proper or casing, cover and fixed shaft are formed to be an integral structure by a forming process. Application technique examples wherein the surface of the rotating shafts and bearings or the surface of elliptical gear rotors are applied with fine ceramic coatings or metal platings or other surface hardening processes shall be covered by the present invention. Rotors of lighter materials have smaller resistances in accelerating or decelerating the rotational speed and therefore provide a low sensible flow-rate which is a great advantage. When a product fabricated by a forming process has a lower accuracy, its instrumental error-rotation speed correlation (QE) is inferior in its linearity. However, because the above-mentioned elliptic gears of a tooth form giving less liquid confinement have no deformation in the tooth form, they have good durability and therefore the property shown by said QE curve with inferior linearity represents an ideal curve with small instrumental errors by using electronic compensation and said gears can transmit high accuracy flow-rate values throughout a wide flow-rate range.

An explanation will be made for embodiments of flowmeters shown in Fig.9-a and the following Figures of the drawings.

Fig.9-a shows a front elevation of a synthetic resin flowmeter body. The body 1 has inlet and outlet connections (or flanges) 2, and its cover 3 is secured using fixings 31. Numeral 5 denotes a temperature sensor connected via a cable 8 to a control unit. Fig.9-b is an end view of the body 1 and cover 3. Fig.9-c shows a sectional view along line A-A in Fig.9-a wherein short fixed shafts 9 in the measurement chamber of the casing body 1 are formed integral with said casing body. Short fixed shafts 9 are similarly formed integral with the cover 3. A magnet 71 is provided on the rotor 4. In correspondence to this, a rotation detector sensor 7 is provided in the cover 3, and is connected via a cable or optical fibre 73 to the control unit. The numeral 32 denotes a dowel pin. Bearings 42 at opposed ends of the rotor fit on the shafts 9 and the rotor 4 can rotate freely.

Fig.9-d shows B-B section in Fig.9-b. The temperature sensor 5 is mounted on the instrument body 1 to measure the fluid temperature and is connected to the control unit via cable 8. Fig.9-e shows a perspective view of an integrally formed instrument body 1. The position of a short fixed shaft 9 in the measurement chamber is shown. Fig.9-f shows a perspective view for showing the manner wherein a short fixed shaft 9 is formed integral to the cover 3. Fig.9-g shows a side view of the cover 3. Fig.9-h is an elevation to show the inside of the cover 3. Fig.9-i is a perspective view of the cover 3. Figs.9-j,k,l show an alternative cover 3 with integral short shafts 9.

Fig.10-a is a sectional view of a casing body 1 and a cover 3 having shaft holes 92. Short shafts 41 on both ends formed integral with the rotor 4 fit into said holes 92.

Fig.10-b shows a side view of a cover 3 provided with holes 92 similar to Fig.10-a. Fig.10-c shows a side view of an alternative cover 3 provided with cone-shaped holes 94 having spiral grooves. Fig.10-d shows a side view of another cover 3 provided with a packing section in the measurement chamber. Fig.10-e is a perspective view of the inside of the cover 3 in Fig.10b, and Fig.10-f is a perspective view of the inside of the cover 3 in Fig.10-d.

Fig.11 shows a sectional view of an embodiment having a casing comprising an integral formed body 1 provided with fixed shafts 9 in the measurement chamber and rotors 4 having bearings 42 at one end for the shafts 9 and short shafts 41 at the other end for holes 92 in the cover 3.

Fig.12 shows a sectional view of an embodiment wherein metal shafts or ceramic shafts 91 are fixed on the measurement chamber side of a casing body 1 and cover 3 for mounting the rotors 4.

Fig.13-a shows a sectional view of a structure wherein long fixed shafts 9 are formed integral with a cover 3. The ends of the shafts 9 fit into engaging parts of the body 1 in the measurement chamber of a casing.

Fig.13-b shows a side view of the cover 3 and shafts 9 formed integral therewith. Fig.13-c shows a side view of an alternative cover 3 formed integral with long shafts 9 with packing sections in the measurement chamber. Fig.13-d shows a perspective view of the cover 3 in Fig.13-c. Fig.13-e shows a perspective view of another cover 3 formed integral with long shafts 9 and having periperal flanges. Fig.13-f shows a perspective view of a further cover 3 formed integral with long shafts 9 and provided with packing sections. Fig.13-g shows a perspective view of an alternative cover 3 formed integral with a long shaft 9 and a short shaft 9 and having a recessed area for receiving the packing section of a casing body. Fig.13-h shows a perspective view of the inside of a casing body 1 formed integral with long shafts 9.

Fig.14-a shows a front elevation of a flowmeter with an indicator section. Fig.14-b is an end view thereof, Fig.14-c a rear elevation thereof, and Fig.14-d a sectional view on line A-A in Fig.14-b. A location to be installed with a thermo sensor is shown.

Fig.14-e is a perspective view showing the inside of a body 1 for the casing in Fig.14-a to Fig.14-d formed integral with short shafts 9 in the measurement chamber of the body 1.

Fig.14-f is a perspective view showing the inside of an alternative body 1 for the casing in Fig.14-a to Fig.14-d formed integral with long fixed shafts 9 in the measurement chamber of the body 1.

Fig.14-g and Fig.14-h are rear elevations of covers 3 for the bodies 1 shown in Fig.14-e and Fig.14-f respectively.

Fig.14-i is a side view of an alternative cover 3 provided with conical short fixed shafts 93. Fig.14-j is a side view of another cover 3 formed integral with cylindrical short fixed shafts 9 similar to the cover in Fig.14-i. Fig.14-k is a side view of another cover 3 formed integral with long shafts 9. Fig.14-l and Fig.14-m are perspective views of the covers 3 shown in Fig.14-j and Fig.14-k respectively.

Fig.14-n is a rear elevation of a cover 3 provided with a packing section in the measurement chamber.

Fig.14-o is a side view of a cover 3 formed integral with conical short shafts 93 and packing section. Fig.14-p is a side view of a cover 3 formed integral with cylindrical short shafts 93 and packing section similar to Fig.14-0. Fig.14-q is a side view of a cover 3 formed integral with long shafts 9 and packing section. Fig.14-r and Fig.14-s are perspective rear views of the covers 3 shown in Fig.14-o and Fig.14-q respectively.

Fig.15-a is a sectional view of a flowmeter with a divided casing having short shafts 9 formed integral with each half. Fig.15-b shows the inside of one half of the casing 1 and Fig.15-c is a rear elevation showing the inlet and outlet connections (or flanges) 2.

Fig.16 is a perspective view of a gear rotor 4 with a cylindrical short shaft 92, and Fig.17 is a perspective view of another gear rotor 4 with rotation detector 72 located in the cylindrical shaft 92.

Fig.18 is a perspective view of an alternative gear rotor 4 with a conical short shaft 93, and Fig.19 is a perspective view of a further gear rotor 4 with a conical bearing hole 42.

Figs.20 to 23 are views of a flowmeter with indicator section 103 and strainer 200.

The present invention has an effect that super precision measurement function for indicating accumulated flow or instantaneous flow-rate can be exercised in a wide flow-rate range for conditions having large temperature changes, by providing micro-computers for indication and transmission which instantaneously compensate errors of flow-rate indicated by viscosity changes in response to temperature changes of a subject fluid in order to enhance the accuracy of flow-rate indicated by an elliptical gear flowmeter having accepted reliability. Without limiting to the the above-cited displacement type flowmeters, any electronic arithmetic mechanism or compensation thereof in other type of flowmeters which compensate the effect of viscosity changes by temperature changes to exert changes on instrumental errors by liquid temperature changes shall be within the scope of the invention as defined by the claims.

## Claims

1. A method of improving the accuracy of a flowmeter (1) having a casing (3) defining a measurement chamber with an inlet and outlet means (2) and rotor means (4) within the casing (3) responsive to the flow-rate of fluid flowing therethrough, the method comprising the steps of:
monitoring the temperature of the fluid in the measurement chamber or a pipe connected thereto,
monitoring the rotation of the rotor means (4) with a rotation sensor (7), and
inputting signals representative of these quantities to an electronic arithmetic and control unit (100),
operating said control unit (100) to calculate the flow-rate on the basis of the rotational speed of the rotor means (4), and to compensate said calculated flow-rate for specific gravity variation using first data relating specific gravity of said fluid with associated instrument errors as a function of temperature of the fluid, said first data being stored In a memory (111) in the control unit (100),
using the monitored temperature to generate a correction value from second data stored in a memory of the control unit (100) relating viscosity of said fluid with internal leakage as a function of temperature, and from the period of pulses from the rotation sensor (7), said correction value being arranged to compensate for internal leakage between walls of the casing (3) and the rotor means (4) and/or between the rotor means (4), which leakage varies in dependence on viscosity, and
adding said correction value to the flow-rate compensated using said first data for outputting and indicating a corrected flow-rate.

2. Apparatus for carrying out the method of Claim 1 comprising:
an electronic arithmetic and control unit (100) arranged to calculate the flow-rate on the basis of rotational speed of the rotor means (4),
a temperature sensor (5) fitted to the measurement chamber or a pipe connected thereto, and providing a signal representative of the temperature of the fluid,
means in said control unit (100) storing first data relating specific gravity of said fluid with associated instrument errors as a function of temperature,
means (112) arranged to compensate said calculated flow-rate for specific gravity variations using the first data stored in said means,
means (114) for storing second data relating viscosity with internal leakage as a function of temperature,
means (115) arranged to use the monitored temperature to determine a correction value from said second data and from the period of pulses from the rotation sensor (7), which correction value is arranged to compensate for internal leakage between walls of the casing (3) and the rotor means (4) and/or between the rotor means (4), which leakage varies in dependence on viscosity, and
means arranged to output and indicate a corrected flow-rate compensated for internal leakage by adding the correction value to the flow-rate compensated using said first data.

## Patentansprüche

1. Verfahren zur Verbesserung der Genauigkeit eines Durchflußmeßgerätes (1) mit einem Gehäuse (3), welches eine Meßkammer begrenzt, mit einem Einlaß und einem Auslaß (2) und einem Rotor (4) innerhalb des Gehäuses (3), der sich in Abhängigkeit von der Durchflußrate von Flüssigkeit, die hindurchfließt, dreht, wobei das Verfahren die folgenden Schritte umfaßt:
Messung der Temperatur der Flüssigkeit in der Meßkammer oder einem an diese angeschlossenen Rohr,
Messung der Drehzahl des Rotors (4) mit einem Drehsensor (7), und
Eingabe von Signalen, die diesen Meßwerten entsprechen, in ein elektronisches Rechen- und Steuerwerk (100),
Betreiben der Steuereinheit (100) zur Berechnung der Flußrate auf der Basis der Drehzahl des Rotors (4) und Kompensieren dieser berechneten Durchflußrate für die Abweichung der spezifischen Dichte mittels erster Daten, die die spezifische Dichte der Flüssigkeit mit den zugehörigen Instrumentenfehlern als Funktion der Temperatur der Flüssigkeit in Beziehung setzen, wobei diese ersten Daten in einem Speicher (111) in dem Steuerwerk (100) gespeichert sind, Verwendung des gemessenen Temperaturwerts zur Erzeugung eines Korrekturwertes aus zweiten Daten, die in einem Speicher des Steuerwerks (100) gespeichert sind und die Viskosität der Flüssigkeit mit dem inneren Durchsickern als Funktion der Temperatur und der Impulsperiode des Rotationssensors (7) in Beziehung setzen, wobei der Korrektionswert so eingerichtet ist, daß er das innere Durchsickern zwischen den Wänden des Gehäuses (3) und dem Rotor (4) und/oder zwischen den Rotoren (4) kompensiert, wobei dieses Durchsickern in Abhängigkeit von der Viskosität schwankt, und
Hinzurechnen des Korrekturwerts zu der Durchflußrate, die unter Verwendung der ersten Daten kompensiert ist, um eine korrigierte Durchflußrate auszugeben und anzuzeigen.

2. Vorrichtung zur Durchführung des Verfahrens nach Anspruch 1 mit:
einem elektronischen Rechen- und Steuerwerk (100), welches eingerichtet ist, um die Durchflußrate aufgrund der Drehzahl des Rotors (4) zu berechnen,
einem Temperatursensor (5), der an der Meßkammer oder einem daran angeschlossenen Rohr angebracht ist, und ein Signal liefert, welches der Temperatur der Flüssigkeit entspricht,
einer Vorrichtung in dem Steuerwerk (100), welche erste Daten speichert, die die spezifische Dichte der Flüssigkeit mit den zugehörigen Instrumentenfehlern als Funktion der Temperatur in Bezug setzen,
einer Vorrichtung (112), die zur Kompensation der berechneten Durchflußrate in Abhängigkeit von den Schwankungen der spezifischen Dichte unter Verwendung der ersten Daten, die in der Vorrichtung gespeichert sind, eingerichtet ist,
einer Vorrichtung (114) zur Speicherung zweiter Daten, die die Viskosität mit dem inneren Durchsickern als Funktion der Temperatur in Beziehung setzen,
einer Vorrichtung (115), die eingerichtet ist, um die gemessene Temperatur zu verwenden, um einen Korrekturwert von den zweiten Daten und von der Periode der Impulse des Rotationssensors (7) zu bestimmen, wobei dieser Korrekturwert zur Kompensation des inneren Durchsickerns zwischen den Wänden des Gehäuses (3) und dem Rotor (4) und/oder zwischen dem Rotor (4) dient, wobei dieses Durchsickern in Abhängigkeit von der Viskosität schwankt, und
einer Vorrichtung zur Ausgabe und Anzeige einer hinsichtlich des inneren Durchsickerns durch Addition der Korrekturwerte zu der Durchflußrate, die mittels der ersten Daten kompensiert ist, korrigierten Durchflußrate.

## Revendications

1. Procédé d'amélioration de la précision d'un débitmètre (1) ayant un boitier (3) définissant une chambre de mesure avec des moyens d'entrée et de sortie (2) et des moyens à rotor (4) disposés à l'intérieur du boîtier (3) et qui sont sensibles au débit de fluide s'écoulant à travers celui-ci, le procédé comprenant les étapes suivantes :
On contrôle la température du fluide dans la chambre de mesure ou dans un tube qui lui est raccordé,
On contrôle la rotation des moyens à rotor (4) par un capteur de rotation (7) et,
On entre des signaux représentatifs de ces quantités dans une unité de contrôle arithmétique électronique (100),
On fait fonctionner ladite unité de contrôle (100) pour calculer le débit sur base de la vitesse de rotation des moyens à rotor (4) et pour compenser dans ledit débit calculé la variation du poids volumique en utilisant une série de premières données rapportant le poids volumique dudit fluide à des erreurs instrumentales associées en fonction de la température du fluide, lesdites premières données étant stockées dans une mémoire (111) de l'unité de contrôle (100),
On utilise la température contrôlée pour générer une valeur de correction à partir de secondes données stockées dans une mémoire de l'unité de contrôle (100) rapportant la viscosité dudit fluide à une fuite interne en fonction de la température et à partir de la période d'impulsions provenant du capteur de rotation (7), ladite valeur de correction étant aménagée pour compenser la fuite interne entre les parois du boîtier (3) et les moyens à rotor (4) et/ou entre les moyens rotor (4), cette fuite variant en fonction de la viscosité, et
On ajoute ladite valeur de correction au débit compensé en utilisant lesdites premières données pour sortir et afficher un débit corrigé.

2. Appareil permettant de réaliser le procédé de la revendication 1 comprenant :
Une unité de contrôle arithmétique électronique (100) agencée pour calculer le débit sur base de la vitesse de rotation des moyens à rotor (4),
Un capteur de température (5) ajusté dans la chambre de mesure ou sur un tube qui lui est raccordé et fournissant un signal représentatif de la température du fluide,
Des moyens dans ladite unité de contrôle (100) stockant les premières données rapportant le poids volumique dudit fluide à des erreurs instrumentales associées en fonction de la température,
Des moyens (112) agencés pour compenser dans ledit débit calculé les variations de poids volumique en utilisant les premières données stockées dans lesdits moyens,
Des moyens (114) pour stocker les secondes données rapportant la viscosité à une fuite interne en fonction de la température,
Des moyens (115) agencés pour utiliser la température contrôlée afin de déterminer une valeur de correction à partir desdites secondes données et de la période d'impulsions provenant du capteur de rotation (7), laquelle valeur de correction est aménager pour compenser la fuite interne entre les parois du boîtier (3) et les moyens à rotor (4) et/ou entre les moyens rotor (4), cette fuite variant en fonction de la viscosité, et
Des moyens agencés pour sortir et afficher un débit corrigé compensé pour la fuite interne en ajoutant la valeur de correction au débit compensé en utilisant lesdites premières données.
